# EUROPEAN PATENT SPECIFICATION

(11) **EP 3 313 029 B1**
(45) Date of publication and mention of the grant of the patent: **09.03.2022**
(21) Application number: 16810744.9
(22) Date of filing: 22.02.2016
(51) Int. Cl.: H04L 12/723, H04L 29/12, H04L 29/06, H04L 12/751

(54) **LABEL PROCESSING METHOD AND APPARATUS, AND ROUTING INFORMATION DELIVERY METHOD AND APPARATUS**
ETIKETTENVERARBEITUNGSVERFAHREN UND -GERÄTE UND LIEFERVERFAHREN UND -GERÄTE FÜR ROUTING-INFORMATIONEN
PROCÉDÉ ET APPAREIL DE TRAITEMENT D'ÉTIQUETTE, ET PROCÉDÉ ET APPAREIL DE LIVRAISON D'INFORMATIONS D'ACHEMINEMENT

(30) Priority: 16.06.2015 CN 201510334704
(43) Date of publication of application: 25.04.2018
(73) Proprietor: ZTE Corporation, Shenzhen, Guangdong 518057 (CN)
(72) Inventor: ZHANG, Zheng, Shenzhen Guangdong 518057 (CN)
(74) Representative: Regimbeau
(86) International application number: PCT/CN2016/074243
(87) International publication number: WO 2016/202003

(56) References cited:
- CN-A- 101 692 669
- CN-A- 102 143 041
- US-A1- 2007 076 732
- US-A1- 2009 010 201
- US-A1- 2015 043 570
- US-A1- 2015 092 593
- US-B2- 8 995 304

## Description

### TECHNICAL FIELD

The present disclosure relates to the field of communications, and in particular, to a label processing method and apparatus, and routing information delivery method and apparatus.

### BACKGROUND

In the related art, Internet technologies are getting mature and developing in scale, multicast technologies such as interactive Internet Protocol Television (IPTV), videoconference and Virtual Private Network (VPN) are increasingly widely used. When carried in various forms through a public network, multicast traffic can be well transmitted. When a user network accesses the public network, user multicast traffic can be carried in the public network in modes such as multicast, multipoint extensions for Label Distribution Protocol (mLDP), Point-to-Multipoint Traffic Engineering (P2MP TE). The public network does not need to sense the user multicast traffic and only provides bearer. As multicast technologies are applied in more and more scenarios, more requirements are imposed for sustainable development of related art.

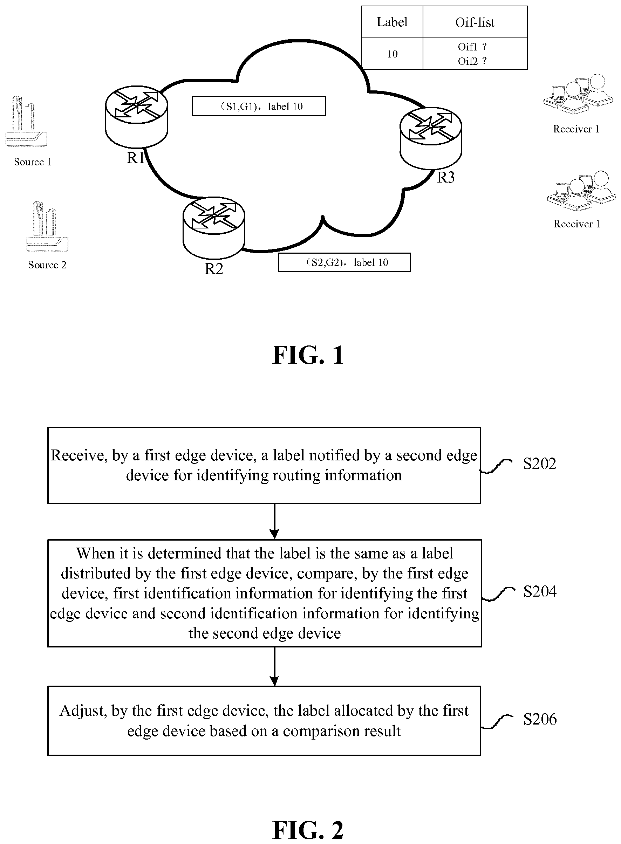

When the user network accesses the public network, since locations of user multicast traffic sources are different, some edge devices such as Provider's Edges (PEs) need to perform access tasks. Depending on network deployment, some PEs not only serve as ingress devices, but may also serve as egress devices due to presence of receivers. A same PE may serve multiple user networks simultaneously. A downstream egress PE selects an ingress PE according to multicast routing information sent by different ingress PEs and establishes, together with the selected PE, a public network tunnel for transmitting the multicast traffic. The ingress PE allocates, for multicast routing, an upstream label for indicating specific multicast routing information. A user multicast traffic label is used in conjunction with a public network tunnel label to allow the user multicast traffic to reach the egress PE device through the public network multicast tunnel. Then the egress PE device sends the routing to a correct receiver based on information of upstream multicast routing label. However, when multiple PEs send information of upstream multicast routing labels simultaneously, these labels may conflict, i.e., different devices may allocate a same upstream routing label, and the egress PE cannot determine which user multicast traffic the label corresponds to. FIG. 1 is a schematic diagram of a conflict between allocated upstream routing labels in the related art. As illustrated in FIG. 1, an egress PE is in disorder and thus fails to forward traffic correctly, even causing traffic leakage. A traditional solution usually avoids a label conflict by configuring different label pools on two PEs. However, such configuration is inflexible. In practical networks, various PEs do not have a same opportunity for bearing different user multicast traffic, and the conditions of the network keep changing. All resources in some PE label pools may have been allocated while a number of resources in some other PE label pools may remain unallocated. In this case, a readjustment is required, which is quite complex and has a high error rate, causing great difficulty in management, operation and maintenance. This is also the case with upstream routing labels allocated for unicast routings.

A solution remains to be provided to solve a problem in the related art of the complexity and high error rate in the adjustment of a label pool caused by manual label configuration for avoiding label conflict.

Document US 8,995,304 B2 provides a computer program product comprising computer executable instructions stored on a non-transitory medium of an upstream node that when executed by a processor cause the node to advertise an upstream assigned label to a downstream node, receive a message from the downstream node, and if the received message confirms that no conflict with the upstream assigned label exists at the downstream node, assign the upstream-assigned label, or if the received message confirms that a conflict with the upstream-assigned label exists at the downstream node, either select a new upstream-assigned label or wait until indication is received that the label resource has become available.

Document US2009/0010201A1 proposes a technique for providing a mobile communication access system, etc., that can eliminate the useless consumption of resources due to route redundancy, reduce the load on the processing, such as the setup of an LSP, performed by an ingress LSR, avoid an increase in the length of a signal route for setting up an LSP, suppress a delay in providing a notification of a change for an egress LSR to which a mobile terminal is to be connected, and perform a rapid handover process.

Document US2015/0092593A1 proposes an apparatus including a first edge device that is operatively coupled to a second edge device via a switch fabric. The first edge device communicates with the second edge device via a MPLS tunnel through the switch fabric.

### SUMMARY

The present disclosure provides a label processing method and apparatus, and routing information delivery method and apparatus according to independent claims, so as to solve at least a problem in the related art of the complexity and high error rate in the adjustment of a label pool caused by a manual label configuration for avoiding label conflict. Preferred embodiments are covered by the dependent claims. solves a problem in the related art of the complexity and high error rate in the adjustment of a label pool caused by a manual label configuration for avoiding label are the same. Therefore, an effect of using an edge device to adjust a label without manual intervention to avoid the complexity and high error rate in the adjustment of a label pool caused by the manual label configuration can be achieved.

### BRIEF DESCRIPTION OF DRAWINGS

The accompanying drawings described herein are used to provide a further understanding of the present disclosure, and form a part of the present application. In the accompanying drawings:
FIG. 1 is a schematic diagram of a conflict between upstream allocated routing labels in the related art;
FIG. 2 is a flowchart of a label processing method according to an embodiment of the present disclosure;
FIG. 3 is a flowchart of a routing information delivery method according to an embodiment of the present disclosure;
FIG. 4 is a block diagram of a label processing apparatus according to an embodiment of the present disclosure;
FIG. 5 is a block diagram of an adjustment module 46 in a label processing apparatus according to an embodiment of the present disclosure;
FIG. 6 is a preferred block diagram 1 of a structure of a label processing apparatus according to an embodiment of the present disclosure;
FIG. 7 is a preferred block diagram 2 of a structure of label processing apparatus according to an embodiment of the present disclosure;
FIG. 8 is a preferred block diagram 3 of a structure of a label processing apparatus according to an embodiment of the present disclosure;
FIG. 9 is a block diagram of a structure of a routing information delivery apparatus according to an embodiment of the present disclosure;
FIG. 10 is a block diagram of a structure of a delivery module 96 in a routing information delivery apparatus according to an embodiment of the present disclosure;
FIG. 11 is a flowchart of a label conflict processing method according to an embodiment of the present disclosure;
FIG. 12 is a schematic diagram of a network in absence of a label conflict according to an embodiment of the present disclosure; and
FIG. 13 is a schematic diagram of a network in a case of a label conflict according to an embodiment of the present disclosure.

### DETAILED DESCRIPTION

The present invention will be described hereinafter in detail with reference to the accompanying drawings in connection with the embodiments. It is noted that the scope of the invention is defined by the appended claims. The embodiments referred to hereafter not being part of the claimed subject matter are to be considered exemplary.

It is noted that the terms "first", "second" and the like in the description, claims and drawings of the present disclosure are used to distinguish between similar objects and are not necessarily used to describe a particular order or sequence.

FIG. 2 is a flowchart of a label processing method according to an embodiment of the present disclosure. As illustrated in FIG. 2, the method includes steps described below.

In step S202, a first edge device receives a label notified by a second edge device for identifying routing information.

In step S204, when it is determined that the label is the same as a label distributed by the first edge device, the first edge device compares first identification information for identifying the first edge device and second identification information for identifying the second edge device.

In step S206, the first edge device adjusts, based on a comparison result, the label allocated by the first edge device.

Through these steps, when labels allocated by different edge devices are the same, the edge devices adjust the allocated labels according to identification information of the edge devices, thereby eliminating manual intervention. Compared to a solution in the related art where a label pool needs to be configured manually, the label processing method provided by the present embodiment avoids a problem in the related art of the complexity and high error rate in the adjustment of the label pool caused by a manual label configuration, solves the problem in the related art of the complexity and high error rate in the adjustment of the label pool caused by manual label configuration for avoiding label conflict, and thus achieves an effect of using an edge device to adjust a label without manual intervention to avoid the complexity and error rate in the adjustment of the label pool caused by the manual label configuration.

In an alternative embodiment, the above first identification information includes an IP address of the first edge device and the above second identification information includes an IP address of the second edge device. Of course, the comparison between the IP addresses of the edge devices is merely an example. Other identification information of edge devices may be used in the comparison. For example, each edge device is given a number, which is notified to all edge devices and used for adjusting labels allocated by the edge devices.

In an alternative embodiment, the step in which the first edge device adjusts, based on the comparison result, the label allocated by the first edge device includes at least one of the following: when the comparison result shows that the IP address of the first edge device is greater than the IP address of the second edge device, the first edge device reallocates a label; and when the comparison result shows that the IP address of the first edge device is less than the IP address of the second edge device, the first edge device reallocates a label. Alternatively, labels may be reallocated in a time-division manner. For example, an edge device with a larger IP address reallocates a label in a first time period while an edge device with a smaller IP address reallocates a label in a second time period.

In an alternative embodiment, when the comparison result shows that the first edge device needs to adjust the label allocated by the first edge device and after the first edge device adjusts, based on the comparison result, the label allocated by the first edge device, the method further includes that the first edge device notifies other edge devices of the reallocated label.

In an alternative embodiment, before the first edge device receives the label notified by the second edge device, the method further includes that the first edge device allocates a label according to a predetermined offset from a smallest label. That is, to avoid numerous conflict between labels, each edge device may allocates a label in a different direction (e.g., from a smallest label), and some edge devices may allocate labels according to random offsets. Assuming that the smallest label is 1, the second edge device may allocate a label from 1, the first edge device may allocate a label from 10, and other edge devices may allocate labels from 50, and so on.

Before the first edge device receives the label notified by the second edge device, the method further includes that the first edge device notifies other devices of capability information of the first edge device. The capability information is used for identifying that the first edge device is capable of reallocating a label. The other devices may be devices excluding the first edge device. The other devices may include edge devices capable of reallocating labels and edge devices incapable of reallocating labels. That is, edge devices capable of allocating labels may also notify each other.

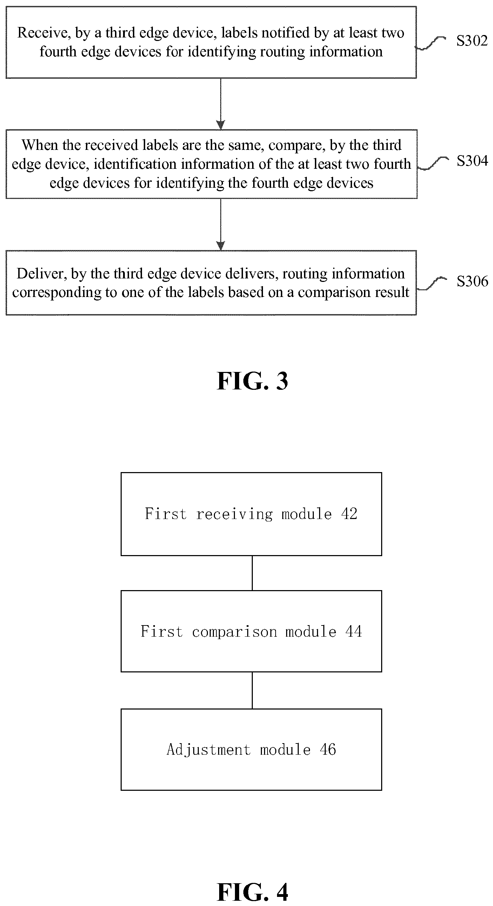

FIG. 3 is a flowchart of a routing information delivery method according to an embodiment of the present disclosure. As illustrated in FIG. 3, the method includes steps described below.

In step S302, a third edge device receives labels notified by at least two fourth edge devices for identifying routing information.

In step S304, when the received labels are the same, the third edge device compares identification information of the at least two fourth edge devices for identifying the fourth edge devices.

In step S306, the third edge device delivers, based on a comparison result, routing information corresponding to one of the labels.

In this process, the third edge device may be a downstream egress edge device. The fourth edge devices and the above first edge device may be the same or different, and the fourth edge devices and the above second edge device may be the same or different. Through these steps, when receiving at least two same labels, the third edge device determines a valid label according to the identification information of the fourth edge devices and then may notify a downstream device of routing information of this valid label. This effectively solves a problem in the related art of disordered routing caused by the conflict of upstream labels, thus facilitating network management, operation and maintenance.

In an alternative embodiment, the identification information of the above fourth edge devices includes IP addresses of the fourth edge devices. In this case, when routing information is delivered, the IP addresses of the edge devices sending the same labels may be compared to select routing information which has been delivered normally. Similarly, the comparison of the IP addresses of the edge devices is merely an example. Other identification information, e.g., numbers of the fourth edge devices, of the edge devices may be compared.

In an alternative embodiment, the step in which the third edge device delivers, based on the comparison result, the routing information corresponding to one of the labels includes at least one of the following: the third edge device delivers routing information corresponding to a label notified by a fourth edge device having a smallest IP address among the fourth edge devices; and the third edge device delivers routing information corresponding to a label notified by a fourth edge device having a largest IP address among the fourth edge devices.

From the description of the implementations described above, it is apparent to those skilled in the art that the method of the embodiments described above may be implemented by means of software and necessary general-purpose hardware, or may of course be implemented by hardware only; however, the former is the preferred implementation in many cases. Based on this understanding, the solution provided by the present disclosure substantially, or the part contributing to the related art, may be embodied in the form of a software product. The software product is stored on a storage medium (e.g., ROM/RAM, magnetic disk or optical disk) and includes instructions enabling a terminal device, which may be a mobile phone, a computer, a server or a network device, to execute the method according to embodiments of the present disclosure.

Embodiments of the present disclosure further provide a label processing apparatus for implementing the above-mentioned embodiments and preferred implementations. What has been described will not be repeated. As used below, the term "module" may be software, hardware or a combination thereof capable of implementing preset functions. The apparatus described in the following embodiments is preferably implemented by software, but implementations with hardware or a combination of software and hardware are also possible and conceivable.

FIG. 4 is a block diagram of a label processing apparatus according to an embodiment of the present disclosure. The apparatus is applicable to a first edge device. As illustrated in FIG. 4, the apparatus includes a first receiving module 42, a first comparison module 44 and an adjustment module 46. The apparatus is described below.

The first receiving module 42 is configured to receive a label notified by a second edge device for identifying routing information. The first comparison module 44 is connected to the first receiving module 42 and is configured, when it is determined that the label is the same as a label allocated by the first edge device, to compare first identification information for identifying the first edge device and second identification information for identifying the second edge device. The adjustment module 46 is connected to the first comparison module 44 and is configured to adjust, based on a comparison result, the label allocated by the first edge device.

In an alternative embodiment, the above first identification information includes an IP address of the first edge device and the above second identification information includes an IP address of the second edge device.

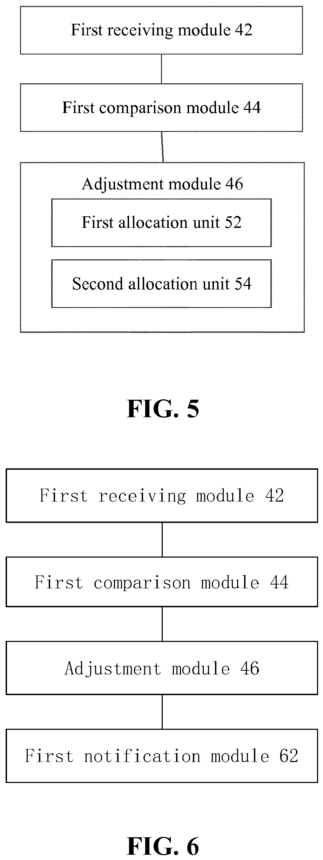

FIG. 5 is a block diagram of an adjustment module 46 in a label processing apparatus according to an embodiment of the present disclosure. As illustrated in FIG. 5, the adjustment module 46 includes a first allocation unit 52 and/or a second allocation unit 54. The adjustment module 46 is described below.

The first allocation unit 52 is configured, when the comparison result shows that the IP address of the first edge device is greater than the IP address of the second edge device, to reallocate a label. The second distribution unit 54 is configured, when the comparison result shows that the IP address of the first edge device is less than the IP address of the second edge device, to reallocate a label.

When the comparison result shows that the first edge device needs to adjust the label allocated by the first edge device, the first edge device needs to notify other edge devices of the reallocated label. FIG. 6 is a preferred block diagram 1 of a structure of a label processing apparatus according to an embodiment of the present disclosure. As illustrated in FIG. 6, the apparatus further includes a first notification module 62 in addition to all the modules illustrated in FIG. 4. The apparatus is described below.

The first notification module 62 is connected to the above adjustment module 46 and is configured to notify other edge devices of the reallocated label.

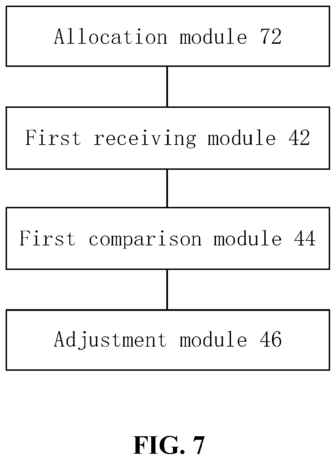

FIG. 7 is a preferred block diagram 2 of a structure of a label processing apparatus according to an embodiment of the present disclosure. As illustrated in FIG. 7, the apparatus further includes a allocation module 72 in addition to all the modules illustrated in FIG. 4. The apparatus is described below.

The distribution module 72 is connected to the above first receiving module 42 and is configured to allocate a label according to a predetermined offset from a smallest label.

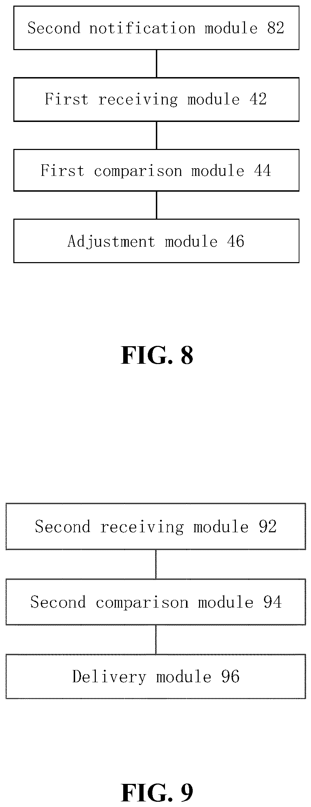

FIG. 8 is a preferred block diagram 3 of a structure of a label processing apparatus according to an embodiment of the present disclosure. As illustrated in FIG. 8, the apparatus further includes a second notification module 82 in addition to all the modules illustrated in FIG. 4. The apparatus is described below.

The second notification module 82 is connected to the above first receiving module 42 and is configured to notify other devices of capability information of the first edge device. The capability information is used for identifying that the first edge device is capable of allocating a label.

FIG. 9 is a block diagram of a structure of a routing information delivery apparatus according to an embodiment of the present disclosure. The apparatus is applicable to a third edge device. As illustrated in FIG. 9, the apparatus includes a second receiving module 92, a second comparison module 94 and a delivery module 96. The apparatus is described below.

The second receiving module 92 is configured to receive labels notified by at least two fourth edge devices for identifying routing information. The second comparison module 94 is connected to the above second receiving module 92 and is configured, when the received labels are the same, to compare identification information of the at least two fourth edge devices for identifying the fourth edge devices. The delivery module 96 is connected to the above second comparison module 94 and is configured to deliver, based on a comparison result, routing information corresponding to one of the label.

In an alternative embodiment, the identification information of the fourth edge devices includes IP addresses of the fourth edge devices.

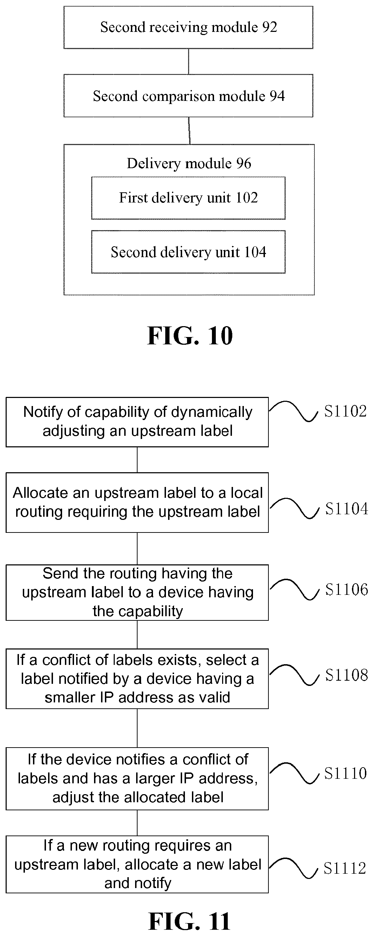

FIG. 10 is a block diagram of structure of a delivery module 96 in a routing information delivery apparatus according to an embodiment of the present disclosure. As illustrated in FIG. 10, the delivery module 96 includes a first delivery unit 102 and/or a second delivery unit 104. The delivery module 96 is described below.

The first delivery unit 102 is configured to deliver routing information corresponding to a label notified by a fourth edge device having a smallest IP address among the at least two fourth edge devices. The second delivery unit 104 is configured to deliver routing information corresponding to a label notified by a fourth edge device having a largest IP address among the at least two fourth edge devices.

The present disclosure is described below by means of an example in which identification information of edge devices is IP addresses and a label allocated by an edge device having a larger IP address is adjusted. In the following description, the edge devices are referred to as devices.

Edge devices in a network interact with each other to exchange capabilities of adjusting upstream labels. Such capabilities can be implemented using an extended Border Gateway Protocol (BGP) or other extended protocols. Devices having such capabilities allocate corresponding labels according to requirements for upstream labels and notify other devices having such capabilities. After the devices notify each other, a unified solution is available to conflicting labels. According to the solution, a routing notified by a device having a smaller IP address is valid; a label allocated by a device having a larger IP address is adjusted dynamically to avoid the conflict of labels and notify again. When the network changes and a new label needs to be added, the new label is allocated and notified. Thus, labels in the network do not conflict, solving a problem of disordering routing caused by conflict between allocated upstream routing labels. This solution is flexible and facilitates network management, operation and maintenance.

FIG. 11 is a flowchart of a label conflict processing method according to an embodiment of the present disclosure. As illustrated in FIG. 11, the method includes steps described below.

In step S1102, when performing a BGP signaling interaction or another signaling interaction, an edge device in a network notifies that the this edge device is capable of adjusting upstream labels. This step includes that the edge device in the network has the capability of adjusting upstream labels by default, or enables this capability through a configuration according to requirements, and sends a notification of this capability when performing a signaling interaction through a BGP protocol or another protocol.

In step S1104, requirements of the edge device for the upstream routing labels are collected and corresponding labels are allocated. In particular, to prevent all devices from allocating the labels from a smallest label to cause a large-scale conflict, the devices may allocate labels according to random offsets. This step includes collecting requirements of the device for upstream routing labels, which include allocation of upstream multicast or unicast routing labels, and allocation of corresponding labels. In particular, to prevent all devices from allocating the labels from a smallest label causing a large-scale conflict, the devices may allocate labels according to random offsets.

In step S1106, the device notifies, through signaling, label information to other edge devices capable of adjusting upstream labels. This step includes that if the device has upstream routing labels that have been allocated, the routing label information is notified through BGP or another signaling, and all devices having neighbor relationships and such capability receive corresponding routing label information.

In step S1108, after receiving routing label information from other edge devices, the device checks for label conflicts. If a label conflict exists, the device notifies that a routing notified by a device having a smaller IP address is valid. This step includes that after receiving routing label information from other edge devices, the device checks for label conflicts and that if a label conflict exists, the device notifies that a routing notified by a device having a smaller IP address is valid and a routing notified by a device having a larger IP address is invalid.

In step S1110, if a label generated by the device is the same as labels delivered by other edge devices and an IP address of the device is larger, the label is adjusted automatically and notified again. This step includes that if a label generated by the device is the same as labels delivered by other edge devices and an IP address of the device is larger, the label is adjusted automatically and then redelivered to other devices.

In step S1112, if a request for a new upstream label is needed for a new routing, a new label that is not the same as other labels is allocated and notified to other devices. This step includes that if a new routing is generated and a new upstream label is needed for the new routing, a new label is selected from non-conflicting labels and notified to other devices.

This method can solve a problem where allocated upstream routing labels are the same. This method does not involve manual preplanning and preconfiguration and uses edge devices to adjust labels dynamically according to a uniform rule. This method is flexible and facilitates network management, operation and maintenance.

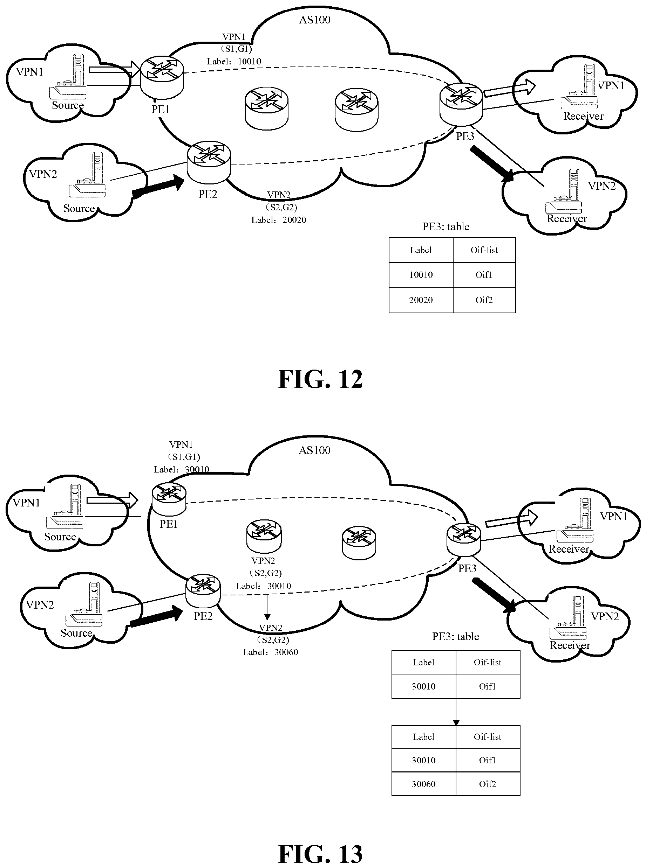

The implementations described below are intended to illustrate a solution for adjusting upstream labels dynamically. The present disclosure will be described below using examples in which a typical multicast route is transmitted through a public network and edge devices perform signaling interactions through a BGP protocol. FIG. 12 is a network diagram in absence of a label conflict according to an embodiment of the present disclosure. In this network:

When performing BGP signaling interactions, edge devices PE1 (same as the first edge device, the second edge device or the fourth edge device described above), PE2 (same as the first edge device, the second edge device or the fourth edge device described above) and PE3 (same as the third edge device described above) in the network notify each other that the respective devices are capable of adjusting upstream labels.

The device PE1 finds a multicast routing to which an upstream label needs to be allocated in the device PE1, and then allocates a label 10010 to the multicast routing. Similarly, the device PE2 allocates a label 20020 to a multicast routing to which an upstream label needs to be allocated in the device PE2.

The devices PE1 and PE2 notify the routings to which the upstream labels have been allocated and the allocated labels to other edge devices through a BGP signaling protocol. The devices PE1, PE2 and PE3 all receive the routings.

The devices PE1, PE2 and PE3 respectively check for label conflicts and find no conflict. The PE3 that has receivers delivers a label table to a forwarding plane. After receiving multicast traffic sent through the public network, the PE3 makes a correct distinction through the upstream labels and sends the multicast traffic to correct receivers.

FIG. 13 is a network diagram in a case of a label conflict according to an embodiment of the present disclosure. In this network:

When performing BGP signaling interactions, edge devices PE1, PE2 and PE3 in the network notify each other that the respective devices are capable of adjusting upstream labels.

The device PE1 finds a multicast routing to which an upstream label needs to be allocated in the device PE1, and then allocates a label 30010 to the multicast routing. Similarly, the device PE2 allocates a label 30010 to a multicast routing to which an upstream label needs to be allocated in the device PE2.

The devices PE1 and the PE2 notify their routings to which the upstream labels have been allocated and the allocated labels to other edge devices through a BGP signaling protocol. The devices PE1, PE2 and PE3 all receive the routings.

The devices PE1, PE2 and PE3 respectively check for label conflicts and find a conflict. Notified addresses of the devices PE1, PE2 and PE3 are compared. Here an IP address of the PE1 is set to a value less than an IP address of the PE2.

The devices PE1 finds that the label is the same as the label notified by the device PE2, but the notified IP address of the device PE1 is less than the notified IP of the device PE2. Thus, the device PE1 does not adjust the label dynamically.

The device PE2 finds that the label is the same as the label notified by the device PE1 and the notified IP address of the device PE2 is greater than the notified IP of the device PE1. Thus, the device PE2 adjusts the upstream allocated label in the device PE2 to 30060 and notifies the devices PE1 and PE3 of the label again.

After receiving the routings, to which the upstream labels have been allocated, notified by the devices PE1 and PE2, the device PE3 finds a label conflict. The PE3 compares the IP addresses notified by the devices PE1 and PE2 and finds that the IP address notified by the PE1 is smaller. Thus, the device PE3 sets the labeled routing of the device PE1 to be valid and performs operations including a delivery to a forwarding plane.

After receiving the route renotified by the PE2, the device PE3 checks for label conflicts and finds no conflict. Thus, the device PE3 sets this route to be valid and performs operations including a delivery to a forwarding plane.

According to the various embodiments described above, edge devices in a network interact with each other in terms of capabilities of adjusting upstream labels, distribute corresponding labels according to requirements for upstream labels and notify other devices having such capability. After the devices notify each other, a unified solution is available to conflicting labels. A labeled routing notified by a device having a smaller IP address is valid. A label allocated by a device having a larger IP address is adjusted dynamically. When the network changes and a new label that is not the same as other labels needs to be added, the new label is distributed and notified. Thus, labels in the network are different. It can be seen from the above that the methods and the systems described in embodiments of the present disclosure do not involve manual preplanning and preconfiguration of an upstream routing label pool; network devices interact with each other in terms of capabilities of adjusting upstream labels; devices having such capabilities notify each other of upstream routing labels; a unified solution is available to conflicting labels; a routing notified by a device having a smaller IP address is valid and a label which is not the same as other labels and allocated by a device having a larger IP address is adjusted dynamically. When the network changes, only a newly added routing label is notified. This solution avoids difficulty and complexity caused by manual label configuration, and well solves a problem where routes are in disorder and traffic cannot be forwarded normally due to conflict of upstream routing labels. In this solution, it is not needed to specify a range of a label pool on a device in advance. This solution is flexible and facilitates network management, operation and maintenance.

The various modules described above may be implemented by software or hardware. Implementation by hardware may, but may not necessarily, be performed by, the following method: The various modules described above are located in a same processor or their respective processors.

Another embodiment of the present disclosure provides a storage medium. Optionally, in the present embodiment, the storage medium may be configured to store program codes for executing the steps described below.

In step S1, a first edge device receives a label notified by a second edge device for identifying routing information.

In step S2, when it is determined that the label is the same as a label allocated by the first edge device, the first edge device compares first identification information for identifying the first edge device and second identification information for identifying the second edge device.

In step S3, the first edge device adjusts, based on a comparison result, the label allocated by the first edge device.

Optionally, the storage medium is further configured to store program codes for executing the steps described below.

In step S1, a third edge device receives labels notified by more than two fourth edge devices for identifying routing information.

In step S2, when the received labels are the same, the third edge device compares identification information of the more than two fourth edge devices for identifying the more than two fourth edge devices.

In step S3, the third edge device delivers, based on a comparison result, routing information corresponding to the labels.

Optionally, in the present embodiment, the storage medium may include, but not limited to, a USB flash disk, a read-only memory (ROM), a random access memory (RAM), a mobile hard disk, a magnetic disk, an optical disk or another medium capable of storing program codes.

Optionally, for specific examples in the present embodiment, reference may be made to the examples described in the above embodiments and alternative embodiments, and the specific examples will not be repeated in the present embodiment.

Apparently, those skilled in the art should know that above-mentioned modules or steps of the present disclosure may be implemented by a universal computing device. The modules or steps may be integrated on a single computing device or distributed in a network of multiple computing devices. Alternatively, the modules or steps may be implemented by program codes executable by the computing devices. In this case, the program codes may be stored in a storage device for execution by the computing devices. In some cases, the illustrated or described steps may be executed in sequences different from those described herein, or may be implemented by various integrated circuit modules separately, or multiple modules or steps therein may be made into a single integrated circuit module for implementation. Therefore, the present disclosure is not limited to any specific combination of hardware and software.

The scope of the present invention is defined by the appended claims.

### INDUSTRIAL APPLICABILITY

As described above, a label processing method and apparatus, and routing information delivery method and apparatus provided by embodiments of the present disclosure solve a problem in the related art of the complexity and high error rate in the adjustment of a label pool caused by manual label configuration for avoiding label conflict, and thus achieve an effect of using an edge device to adjust a label without manual intervention to avoid the complexity and high error rate in the adjustment of a label pool caused by the manual label configuration.

## Claims

1. A label processing method comprising:
receiving (S202), by a first edge device, a label notified by a second edge device for identifying routing information;
when it is determined that the label notified by the second edge device is the same as a label allocated by the first edge device, comparing (S204), by the first edge device, first identification information for identifying the first edge device and second identification information for identifying the second edge device; and
reallocating (S206), by the first edge device, based on a comparison result, the label allocated by the first edge device,
wherein before receiving, by the first edge device, the label notified by the second edge device, the method further comprises:
notifying, by the first edge device, other devices of capability information of the first edge device, wherein the capability information is used for identifying that the first edge device is capable of reallocating a label.

2. The method of claim 1, wherein the first identification information comprises an Internet Protocol, IP, address of the first edge device and the second identification information comprises an IP address of the second edge device,
wherein adjusting, based on the comparison result, the label allocated by the first edge device comprises at least one of the following:
when the comparison result shows that the IP address of the first edge device is greater than the IP address of the second edge device, reallocating, by the first edge device, a label; and
when the comparison result shows that the IP address of the first edge device is less than the IP address of the second edge device, reallocating, by the first edge device, a label.

3. The method of claim 1, wherein when the comparison result shows that the first edge device needs to adjust the label allocated by the first edge device, and after adjusting, by the first edge device, based on the comparison result, the label allocated by the first edge device, the method further comprises:
notifying, by the first edge device, other edge devices of the reallocated label.

4. The method of claim 1, wherein before receiving, by the first edge device, the label notified by the second edge device, the method further comprises:
allocating, by the first edge device, a label according to a predetermined offset from a smallest label.

5. A routing information delivery method comprising:
receiving (S302), by a first edge device, labels notified by at least two second edge devices for identifying routing information;
when the received labels are the same, comparing (S304), by the first edge device, identification information of the at least two second edge devices for identifying the second edge devices; and
delivering (S306), by the first edge device, based on a comparison result, routing information corresponding to one of the labels.

6. The method of claim 5, wherein the identification information of the second edge devices comprises Internet Protocol, IP, addresses of the second edge devices.

7. The method of claim 6, wherein delivering, by the first edge device, based on the comparison result, the routing information corresponding to one of the labels comprises at least one of the following:
delivering, by the first edge device, routing information corresponding to a label notified by a second edge device having a smallest IP address among the at least two second edge devices;
and
delivering, by the first edge device, routing information corresponding to a label notified by a second edge device having a largest IP address among the at least two second edge devices.

8. A label processing apparatus, applied to a first edge device, the apparatus comprises:
a first receiving module (42), which is configured to receive a label notified by a second edge device for identifying routing information;
a first comparison module (44), which is configured, when it is determined that the label notified by the second edge device is the same as a label allocated by the first edge device, to compare first identification information for identifying the first edge device and second identification information for identifying the second edge device; and
an adjustment module (46), which is configured to adjust, based on a comparison result, the label allocated by the first edge device,
wherein the apparatus further comprises:
a first notification module, which is configured to notify other devices of capability information of the first edge device, wherein the capability information is used for identifying that the first edge device is capable of reallocating a label.

9. The apparatus of claim 8, wherein the first identification information comprises an Internet Protocol, IP, address of the first edge device and the second identification information comprises an IP address of the second edge device,
wherein the adjustment module (46) comprises at least one of the following:
a first allocation unit (52), which is configured, when the comparison result shows that the IP address of the first edge device is greater than the IP address of the second edge device, to reallocate a label; and
a second allocation unit (54), which is configured, when the comparison result shows that the IP address of the first edge device is less than the IP address of the second edge device, to reallocate a label.

10. The apparatus of claim 8, wherein when the comparison result shows that the first edge device needs to adjust the label allocated by the first edge device, the apparatus further comprises:
a second notification module, which is configured to notify other edge devices of the reallocated label.

11. The apparatus of claim 8, further comprising:
an allocation module, which is configured to allocate a label according to a predetermined offset from a smallest label.

12. A routing information delivery apparatus, applied to a first edge device, the apparatus comprises:
a receiving module (92), which is configured to receive labels notified by at least two second edge devices for identifying routing information;
a comparison module (94), which is configured, when the received labels are the same, to compare identification information of the at least two second edge devices for identifying the second edge devices; and
a delivery module (96), which is configured to deliver, based on a comparison result, routing information corresponding to one of the labels.

13. The apparatus of claim 12, wherein the identification information of the second edge devices comprises Internet Protocol, IP, addresses of the second edge devices, wherein the delivery module (96) comprises at least one of the following:
a first delivery unit (102), which is configured to deliver routing information corresponding to a label notified by a second edge device having a smallest IP address among the at least two second edge devices; and
a second delivery unit (104), which is configured to deliver routing information corresponding to a label notified by a second edge device having a largest IP address among the at least two second edge devices.

## Patentansprüche

1. Verfahren zur Verarbeitung von Etiketten, umfassend:
Empfangen (S202), durch eine erste Randvorrichtung, eines Etiketts, das durch eine zweite Randvorrichtung zum Identifizieren von Routing-Informationen gemeldet wurde;
wenn bestimmt wird, dass das durch die zweite Randvorrichtung gemeldete Etikett dasselbe ist wie ein durch die erste Randvorrichtung zugewiesenes Etikett, Vergleichen (S204), durch die erste Randvorrichtung, von ersten Identifizierungsinformationen zum Identifizieren der ersten Randvorrichtung und zweiten Identifizierungsinformationen zum Identifizieren der zweiten Randvorrichtung; und
Neuzuweisen S206), durch die erste Randvorrichtung, des durch die erste Randvorrichtung zugewiesenen Etiketts basierend auf einem Vergleichsergebnis,
wobei das Verfahren vor dem Empfangen, durch die erste Randvorrichtung, des durch die zweite Randvorrichtung gemeldeten Etiketts weiter umfasst:
Benachrichtigen, durch die erste Randvorrichtung, anderer Vorrichtungen über Fähigkeitsinformationen der ersten Randvorrichtung, wobei die Fähigkeitsinformationen zum Identifizieren verwendet werden, dass die erste Randvorrichtung in der Lage ist, ein Etikett neu zuzuweisen.

2. Verfahren nach Anspruch 1, wobei die ersten Identifizierungsinformationen eine Internetprotokoll-(IP-)Adresse der ersten Randvorrichtung umfassen und die zweiten Identifizierungsinformationen eine IP-Adresse der zweiten Randvorrichtung umfassen,
wobei das Anpassen des durch die erste Randvorrichtung zugewiesenen Etiketts basierend auf dem Vergleichsergebnis mindestens eines von Folgendem umfasst:
wenn das Vergleichsergebnis zeigt, dass die IP-Adresse der ersten Randvorrichtung größer ist als die IP-Adresse der zweiten Randvorrichtung, Neuzuweisen eines Etiketts durch die erste Randvorrichtung; und
wenn das Vergleichsergebnis zeigt, dass die IP-Adresse der ersten Randvorrichtung kleiner ist als die IP-Adresse der zweiten Randvorrichtung, Neuzuweisen eines Etiketts durch die erste Randvorrichtung.

3. Verfahren nach Anspruch 1, wobei das Verfahren, wenn das Vergleichsergebnis zeigt, dass die erste Randvorrichtung das durch die erste Randvorrichtung zugewiesene Etikett anpassen muss, und nach dem Anpassen des durch die erste Randvorrichtung zugewiesenen Etiketts durch die erste Randvorrichtung basierend auf dem Vergleichsergebnis, weiter umfasst:
Benachrichtigen, durch die erste Randvorrichtung, anderer Randvorrichtungen über das neu zugewiesene Etikett.

4. Verfahren nach Anspruch 1, wobei das Verfahren vor dem Empfangen, durch die erste Randvorrichtung, des durch die zweite Randvorrichtung gemeldeten Etiketts ferner Folgendes umfasst:
Zuweisen eines Etiketts durch die erste Randvorrichtung entsprechend einem vorgegebenen Versatz zu einem kleinsten Etikett.

5. Verfahren zur Übermittlung von Routing-Informationen, umfassend:
Empfangen (S302), durch eine erste Randvorrichtung, von Etiketten, die durch mindestens zwei zweite Randvorrichtungen zum Identifizieren von Routing-Informationen gemeldet wurden;
wenn die empfangenen Etiketten gleich sind, Vergleichen (S304), durch die erste Randvorrichtung, von Identifikationsinformationen der mindestens zwei zweiten Randvorrichtungen zum Identifizieren der zweiten Randvorrichtungen; und
Liefern (S306), durch die erste Randvorrichtung, von Routing-Informationen, die einem der Etiketten entsprechen, basierend auf einem Vergleichsergebnis.

6. Verfahren nach Anspruch 5, wobei die Identifikationsinformationen der zweiten Randvorrichtungen Internetprotokoll- (IP-) Adressen der zweiten Randvorrichtungen umfassen.

7. Verfahren nach Anspruch 6, wobei das Liefern, durch die erste Randvorrichtung, von Routing-Information, die einem der Etiketten entsprechen, basierend auf dem Vergleichsergebnis, mindestens eines von Folgendem umfasst:
Liefern, durch die erste Randvorrichtung, von Routing-Informationen, die einem Etikett entsprechen, das von einer zweiten Randvorrichtung mit der kleinsten IP-Adresse unter den mindestens zwei zweiten Randvorrichtungen gemeldet wurde;
und
Liefern, durch die erste Randvorrichtung, von Routing-Informationen, die einem Etikett Label entsprechen, das von einer zweiten Randvorrichtung mit der größten IP-Adresse unter den mindestens zwei zweiten Randvorrichtungen gemeldet wurde.

8. Einrichtung zur Verarbeitung von Etiketten, die an einer ersten Randvorrichtung angebracht ist, wobei die Einrichtung umfasst:
ein erstes Empfangsmodul (42), das so konfiguriert ist, dass es ein Etikett empfängt, das durch eine zweite Randvorrichtung zum Identifizieren von Routing-Informationen gemeldet wurde;
ein erstes Vergleichsmodul (44), das so konfiguriert ist, dass es, wenn bestimmt wird, dass das durch die zweite Randvorrichtung gemeldete Etikett dasselbe ist wie ein durch die erste Randvorrichtung zugewiesenes Etikett, erste Identifizierungsinformationen zum Identifizieren der ersten Randvorrichtung und zweite Identifizierungsinformationen zum Identifizieren der zweiten Randvorrichtung vergleicht; und
ein Anpassungsmodul (46), das so konfiguriert ist, dass es basierend auf einem Vergleichsergebnis das durch die erste Randvorrichtung zugewiesene Etikett anpasst,
wobei die Einrichtung weiter umfasst:
ein erstes Benachrichtigungsmodul, das so konfiguriert ist, dass es andere Vorrichtungen über Fähigkeitsinformationen der ersten Randvorrichtung benachrichtigt, wobei die Fähigkeitsinformationen zum Identifizieren verwendet werden, dass die erste Randvorrichtung in der Lage ist, ein Etikett neu zuzuweisen.

9. Einrichtung nach Anspruch 8, wobei die ersten Identifizierungsinformationen eine Internetprotokoll-(IP-)Adresse der ersten Randvorrichtung umfassen und die zweiten Identifizierungsinformationen eine IP-Adresse der zweiten Randvorrichtung umfassen,
wobei das Anpassungsmodul (46) mindestens eines von Folgendem umfasst:
eine erste Zuweisungseinheit (52), die so konfiguriert ist, dass sie, wenn das Vergleichsergebnis zeigt, dass die IP-Adresse der ersten Randvorrichtung größer ist als die IP-Adresse der zweiten Randvorrichtung, ein Etikett neu zuweist; und
eine zweite Zuweisungseinheit (54), die so konfiguriert ist, dass sie, wenn das Vergleichsergebnis zeigt, dass die IP-Adresse der ersten Randvorrichtung kleiner ist als die IP-Adresse der zweiten Randvorrichtung, ein Etikett neu zuweist.

10. Einrichtung nach Anspruch 8, wobei, wenn das Vergleichsergebnis zeigt, dass die erste Randvorrichtung das durch die erste Randvorrichtung zugewiesene Etikett anpassen muss, die Einrichtung weiter umfasst:
ein zweites Benachrichtigungsmodul, das so konfiguriert ist, dass es andere Randvorrichtungen über das neu zugewiesene Etikett benachrichtigt.

11. Einrichtung nach Anspruch 8, weiter umfassend:
ein Zuweisungsmodul, das so konfiguriert ist, dass es ein Etikett entsprechend einem vorbestimmten Versatz zu einem kleinsten Etikett zuweist.

12. Einrichtung zur Lieferung von Routing-Informationen, die an einer ersten Randvorrichtung angebracht ist, wobei die Einrichtung umfasst:
ein Empfangsmodul (92), das so konfiguriert ist, dass es Etiketten empfängt, die durch mindestens zwei zweite Randvorrichtungen zum Identifizieren von Routing-Informationen gemeldet wurden;
ein Vergleichsmodul (94), das so konfiguriert ist, dass es, wenn die empfangenen Etiketten gleich sind, Identifizierungsinformationen der mindestens zwei zweiten Randvorrichtungen vergleicht, um die zweiten Randvorrichtungen zu identifizieren; und
ein Liefermodul (96), das so konfiguriert ist, dass es basierend auf einem Vergleichsergebnis, Routing-Informationen liefert, die einem der Etiketten entsprechen.

13. Einrichtung nach Anspruch 12, wobei die Identifizierungsinformationen der zweiten Randvorrichtungen Internetprotokoll- (IP-) Adressen der zweiten Randvorrichtungen umfassen, wobei das Liefermodul (96) mindestens eines von Folgenden umfasst:
eine erste Liefereinheit (102), die so konfiguriert ist, dass sie Routing-Informationen liefert, die einem Etikett entsprechen, welches durch eine zweiten Randvorrichtung mit der kleinsten IP-Adresse unter den mindestens zwei zweiten Randvorrichtungen gemeldet wurde; und
eine zweite Liefereinheit (104), die so konfiguriert ist, dass sie Routing-Informationen liefert, die einem Etikett entsprechen, das durch eine zweite Randvorrichtung mit der größten IP-Adresse unter den mindestens zwei zweiten Randvorrichtungen gemeldet wurde.

## Revendications

1. Procédé de traitement d'étiquette comprenant :
la réception (S202), par un premier dispositif périphérique, d'une étiquette notifiée par un second dispositif périphérique pour identifier des informations de routage ;
lorsqu'il est déterminé que l'étiquette notifiée par le second dispositif périphérique est la même qu'une étiquette allouée par le premier dispositif périphérique, la comparaison (S204), par le premier dispositif périphérique, de premières informations d'identification pour identifier le premier dispositif périphérique et de secondes informations d'identification pour identifier le second dispositif périphérique ; et
la réallocation (S206), par le premier dispositif périphérique, sur la base d'un résultat de comparaison, de l'étiquette allouée par le premier dispositif périphérique,
dans lequel avant la réception, par le premier dispositif périphérique, de l'étiquette notifiée par le second dispositif périphérique, le procédé comprend en outre :
la notification, par le premier dispositif périphérique, à d'autres dispositifs d'informations de capacité du premier dispositif périphérique, dans lequel les informations de capacité sont utilisées pour identifier que le premier dispositif périphérique est capable de réallouer une étiquette.

2. Procédé selon la revendication 1, dans lequel les premières informations d'identification comprennent une adresse de protocole Internet, IP, du premier dispositif périphérique et les secondes informations d'identification comprennent une adresse IP du second dispositif périphérique,
dans lequel l'ajustement, sur la base du résultat de comparaison, de l'étiquette allouée par le premier dispositif périphérique comprend au moins l'un de ce qui suit :
lorsque le résultat de comparaison montre que l'adresse IP du premier dispositif périphérique est supérieure à l'adresse IP du second dispositif périphérique, la réallocation, par le premier dispositif périphérique, d'une étiquette ; et
lorsque le résultat de comparaison montre que l'adresse IP du premier dispositif périphérique est inférieure à l'adresse IP du second dispositif périphérique, la réallocation, par le premier dispositif périphérique, d'une étiquette.

3. Procédé selon la revendication 1, dans lequel lorsque le résultat de comparaison montre que le premier dispositif périphérique doit ajuster l'étiquette allouée par le premier dispositif périphérique, et après l'ajustement, par le premier dispositif périphérique, sur la base du résultat de comparaison, de l'étiquette allouée par le premier dispositif périphérique, le procédé comprend en outre :
la notification, par le premier dispositif périphérique, à d'autres dispositifs périphériques de l'étiquette réallouée.

4. Procédé selon la revendication 1, dans lequel avant la réception, par le premier dispositif périphérique, de l'étiquette notifiée par le second dispositif périphérique, le procédé comprend en outre :
l'allocation, par le premier dispositif périphérique, d'une étiquette selon un décalage prédéterminé par rapport à une étiquette la plus petite.

5. Procédé de remise d'informations de routage comprenant :
la réception (S302), par un premier dispositif périphérique, d'étiquettes notifiées par au moins deux seconds dispositifs périphériques pour identifier des informations de routage ;
lorsque les étiquettes reçues sont les mêmes, la comparaison (S304), par le premier dispositif périphérique, d'informations d'identification des au moins deux seconds dispositifs périphériques pour identifier les seconds dispositifs périphériques ; et
la remise (S306), par le premier dispositif périphérique, sur la base d'un résultat de comparaison, d'informations de routage correspondant à l'une des étiquettes.

6. Procédé selon la revendication 5, dans lequel les informations d'identification des seconds dispositifs périphériques comprennent des adresses de protocole Internet, IP, des seconds dispositifs périphériques.

7. Procédé selon la revendication 6, dans lequel la remise, par le premier dispositif périphérique, sur la base du résultat de comparaison, des informations de routage correspondant à l'une des étiquettes comprend au moins l'une de ce qui suit :
la remise, par le premier dispositif périphérique, d'informations de routage correspondant à une étiquette notifiée par un second dispositif périphérique ayant une IP la plus petite adresse parmi les au moins deux seconds dispositifs périphériques ; et
la remise, par le premier dispositif périphérique, d'informations de routage correspondant à une étiquette notifiée par un second dispositif périphérique ayant une adresse IP la plus grande parmi les au moins deux seconds dispositifs périphériques.

8. Appareil de traitement d'étiquette, appliqué à un premier dispositif périphérique, l'appareil comprend :
un premier module de réception (42), qui est configuré pour recevoir une étiquette notifiée par un second dispositif périphérique pour identifier des informations de routage ;
un premier module de comparaison (44), qui est configuré, lorsqu'il est déterminé que l'étiquette notifiée par le second dispositif périphérique est la même qu'une étiquette allouée par le premier dispositif périphérique, pour comparer des premières informations d'identification pour identifier le premier dispositif périphérique et des secondes informations d'identification pour identifier le second dispositif périphérique ; et
un module d'ajustement (46), qui est configuré pour ajuster, sur la base d'un résultat de comparaison, l'étiquette allouée par le premier dispositif périphérique,
dans lequel l'appareil comprend en outre :
un premier module de notification, qui est configuré pour notifier à d'autres dispositifs des informations de capacité du premier dispositif périphérique, dans lequel les informations de capacité sont utilisées pour identifier que le premier dispositif périphérique est capable de réallouer une étiquette.

9. Appareil selon la revendication 8, dans lequel les premières informations d'identification comprennent une adresse de protocole Internet, IP, du premier dispositif périphérique et les secondes informations d'identification comprennent une adresse IP du second dispositif périphérique,
dans lequel le module d'ajustement (46) comprend au moins l'une de ce qui suit :
une première unité d'allocation (52), qui est configurée, lorsque le résultat de comparaison montre que l'adresse IP du premier dispositif périphérique est supérieure à l'adresse IP du second dispositif périphérique, pour réallouer une étiquette ; et
une seconde unité d'allocation (54), qui est configurée, lorsque le résultat de comparaison montre que l'adresse IP du premier dispositif périphérique est inférieure à l'adresse IP du second dispositif périphérique, pour réallouer une étiquette.

10. Appareil selon la revendication 8, dans lequel lorsque le résultat de comparaison montre que le premier dispositif périphérique doit ajuster l'étiquette allouée par le premier dispositif périphérique, l'appareil comprend en outre :
un second module de notification, qui est configuré pour notifier à d'autres dispositifs périphériques l'étiquette réallouée.

11. Appareil selon la revendication 8, comprenant en outre :
un module d'allocation, qui est configuré pour allouer une étiquette selon un décalage prédéterminé par rapport à une étiquette la plus petite.

12. Appareil de remise d'informations de routage, appliqué à un premier dispositif périphérique, l'appareil comprend :
un module de réception (92), qui est configuré pour recevoir des étiquettes notifiées par au moins deux seconds dispositifs périphériques pour identifier des informations de routage ;
un module de comparaison (94), qui est configuré, lorsque les étiquettes reçues sont les mêmes, pour comparer des informations d'identification des au moins deux seconds dispositifs périphériques pour identifier les seconds dispositifs périphériques ; et
un module de remise (96), qui est configuré pour remettre, sur la base d'un résultat de comparaison, des informations de routage correspondant à l'une des étiquettes.

13. Appareil selon la revendication 12, dans lequel les informations d'identification des seconds dispositifs périphériques comprennent des adresses de protocole Internet, IP, des seconds dispositifs périphériques,
dans lequel le module de remise (96) comprend au moins l'une de ce qui suit :
une première unité de remise (102), qui est configurée pour remettre des informations de routage correspondant à une étiquette notifiée par un second dispositif périphérique ayant une adresse IP la plus petite parmi les au moins deux seconds dispositifs périphériques ; et
une seconde unité de remise (104), qui est configurée pour remettre des informations de routage correspondant à une étiquette notifiée par un second dispositif périphérique ayant une adresse IP la plus grande parmi les au moins deux seconds dispositifs périphériques.
